# EUROPÄISCHE PATENTSCHRIFT

(11) **EP 2 919 987 B1**
(45) Veröffentlichungstag und Bekanntmachung des Hinweises auf die Patenterteilung: **24.10.2018**
(21) Anmeldenummer: 13791931.2
(22) Anmeldetag: 05.11.2013
(51) Int. Cl.: B32B 27/30, B32B 27/34, B32B 1/08, F16L 9/12, B29D 23/00

(54) **FLEXIBLER SCHLAUCH MIT EINER MEHRSCHICHTIGEN WANDUNG**
FLEXIBLE HOSE WITH A MULTIPLE-LAYER WALL
TUYAU FLEXIBLE POURVU D'UNE PAROI MULTICOUCHE

(30) Priorität: 16.11.2012 DE 202012104423 U
(43) Veröffentlichungstag der Anmeldung: 23.09.2015
(73) Patentinhaber: REHAU AG + Co, 95111 Rehau (DE)
(72) Erfinder: GRIEBEL, Dragan, 201210 Shanghai (CN); MÜLLER, Jörg, 95028 Hof (DE); WAZLAWIK, Klaus, 95030 Hof (DE); SCHÖRNER, Georg, 95111 Rehau (DE); BAYREUTHER, Thomas, 95111 Rehau (DE)
(86) Internationale Anmeldenummer: PCT/EP2013/003323
(87) Internationale Veröffentlichungsnummer: WO 2014/075773

(56) Entgegenhaltungen:
- EP-A1- 0 637 509
- EP-A1- 1 559 537
- DE-C1- 19 535 489
- US-A1- 2007 036 926
- US-B1- 6 467 508

## Beschreibung

Die vorliegende Erfindung betrifft einen flexiblen Schlauch mit einer mehrschichtigen Wandung. Darüber hinaus betrifft die Erfindung auch ein Fluidleitsystem mit einem flexiblen Schlauch.

Flexible Schläuche finden im Stand der Technik eine vielfältige Verwendung bei der Aufnahme, Speicherung und Leitung von Fluiden.

In vielen Fällen stehen die in den Schläuchen aufgenommenen Fluide dabei unter Druck, was eine besondere Auslegung der Wandung dieser Schläuche erfordert.

In anderen Fällen ist neben der chemischen Beständigkeit gegen das Fluid, wogegen die Wandung des Schlauches auszulegen ist, auch die Permeation von Stoffen, die vom Fluid im Schlauch in die Umgebung, oder von der Umgebung in das Fluid im Schlauch stattfinden kann, durch die Wandung des Schlauches hindurch zu begrenzen oder zu verhindern. Insbesondere gegen den Zutritt Wasser oder Wasserdampf sind verschiedene Fluide sensibel, so dass dagegen Vorkehrungen zu treffen sind.

Daneben werden Schläuche meist konnektiert, um diese an Fluidleitsysteme anzuschließen bzw. aus diesen solche Systeme aufzubauen.

Aus der EP 0 637 509 A1 ist ein Schlauch für die Kraftstoffleitung bekannt, der mehrschichtig aufgebaut ist und eine innerste Schicht aufweist, die aus einem Fluorpolymer oder Polyamidpolymer besteht. Die weiteren Schichten umfassen Polyalkylen-Naphthalat-Polymere, Thermoplasten oder thermoplastische Elastomere und eine Haftvermittlerschicht.

Die US 2007/036926 A1 lehrt, einen mehrschichtigen Schlauch derart auszugestalten, dass eine innerste Schicht eines Fluorpolymers angeordnet ist, daran eine Schicht aus einem Polyamid und an dieser eine Schicht mit Verstärkungsfasern.

Aus der DE 195 35 489 C1 geht eine flexible Kühlwasserleitung für Kraftfahrzeuge hervor, die aus mehreren Kunststoffschichten besteht, wobei die innerste aus Polyvinylidenfluorid besteht. Eine weitere Kunststoffschicht ist als Außenschicht angeordnet, diese besteht aus einem Polyamid.

Die US 6 467 508 B1 gibt Kenntnis zu einem mehrschichtigen Schlauch für den Transport eines Fluids, mit einer inneren Polyamid-Schicht, die mit dem Fluid in Kontakt kommt, und einer Barriereschicht aus einem Fluorpolymer.

In der EP 1 559 537 A1 ist ein mehrschichtiges Kunststoffrohr beschrieben, bei dem eine Trägerschicht aus Kunststoff, die ein Polyamid oder ein Blend mit einem Polyamid ist und mit zumindest zwei Sperrschichten ausgebildet ist. Ein Sperrschichtkunststoff ist EVOH, Polyvinylidenfluorid oder Ethylen-Tetrafluorethylen-Copolymer.

Hier setzt die Erfindung ein, die es sich zur Aufgabe gemacht hat, einen flexiblen Schlauch anzugeben, der eine mehrschichtige Wandung aufweist, wobei die Diffusion von Wasser oder Wasserdampf aus der Umgebung in das Lumen des Schlauches begrenzt sein soll.

Eine weitere Aufgabe der Erfindung ist es, einen flexiblen Schlauch mit einer mehrschichtigen Wandung anzugeben, der in einfacher Art und Weise konnektierbar ist, indem der Schlauch mit Fittingen verbunden wird.

Die Lösung der vorstehend beschriebenen Aufgabe erfolgt gemäß Anspruch 1.

Erfindungsgemäß zeichnet sich der flexible Schlauch mit einer mehrschichtigen Wandung, die ein Lumen umgibt, mit folgender Schichtanordnung:
- eine erste Schicht, die das Lumen des Schlauches begrenzt,
- eine auf der ersten Schicht angeordnete zweite Schicht,
- eine dritte Schicht, die auf der zweiten Schicht angeordnet ist,
wobei die erste Schicht (1.1) Polyvinylidenfluorid (PVDF) enthält oder daraus besteht und / oder ein Co-Polymer des Polyvinylidenfluorids (PVDF) mit Hexafluorpropylen (HFP) enthält oder daraus besteht und / oder ein Co-Polymer des Polyvinylidenfluorids (PVDF) mit Chlortrifluorethylen (CTFE) enthält oder daraus besteht und die dritte Schicht ein Polymermaterial enthält oder aus einem Polymermaterial besteht, das ausgewählt ist aus einem Polyamid, insbesondere einem Polyamid 6 oder einem Polyamid 6.6 oder einem Polyamid 6.10, oder einem vernetzten Polyethylen, insbesondere einem silanvernetzten Polyethylen (PE-Xb),
oder
wobei die erste Schicht ein Polymermaterial enthält oder aus einem Polymermaterial besteht, das ausgewählt ist aus einem Polyamid, insbesondere einem Polyamid 6 oder einem Polyamid 6.6 oder einem Polyamid 6.10, oder einem vernetzten Polyethylen, insbesondere einem silanvernetzten Polyethylen (PE-Xb) und die dritte Schicht Polyvinylidenfluorid (PVDF) enthält oder daraus besteht und / oder ein Co-Polymer des Polyvinylidenfluorids (PVDF) mit Hexafluorpropylen (HFP) enthält oder daraus besteht und / oder ein Co-Polymer des Polyvinylidenfluorids (PVDF) mit Chlortrifluorethylen (CTFE) enthält oder daraus besteht,
dadurch aus, dass
die zweite Schicht an der ersten Schicht und an der dritten Schicht haftet und
dass die zweite Schicht ein Polymermaterial enthält oder aus einem Polymermaterial besteht, das ausgewählt ist aus einem Ethylenvinylacetat oder einem Ethylen-Glycidylmethacrylat-Co-Polymer (E-GMA) oder einem Ter-Polymer aus Ethylen, Glycidylmethacrylat und Vinylacetat (E-GMA-VA), oder einem Ter-Polymer aus Ethylen, Glycidylmethacrylat und Methylacrylat (E-GMA-MA), oder aus einer Mischung der vorgenannten.

Ein flexibler Schlauch mit einer mehrschichtigen Wandung gemäß vorliegender Erfindung begrenzt den Zutritt von Wasser zum Lumen in außerordentlich vorteilhafter Weise.

Durch die Auswahl von Polymermaterialien für die erste Schicht und die dritte Schicht der Wandung des flexiblen Schlauches mit entsprechender Differenz der materialbezogenen normalisierten Wasserdampfdurchlässigkeit, gemessen nach DIN 53122-1:2001-08, Klima D wird vorteilhaft der Wasserzutritt zu dem Lumen und damit zu dem im Lumen geleiteten Fluid begrenzt.

Weiterhin vorteilhaft im Rahmen der vorliegenden Erfindung ist die Haftung der zweiten Schicht an der ersten Schicht und an der dritten Schicht.

Für die Konnektierung ist es erforderlich, dass der Schlauch gerade bei einer mehrschichtigen Wandung die erforderliche Stabilität aufweist, damit diese ohne Beschädigung, schnell und in einfacher Weise vorgenommen werden kann.

Durch dieses Anhaften der Schichten untereinander ist eine einfache Konnektierbarkeit gewährleistet, weil beim Aufschieben eines Endes des flexiblen Schlauches mit einer mehrschichtigen Wandung auf einen Fitting die Gefahr des Abschälens oder Abrollens der ersten Schicht, die das Lumen des Schlauches begrenzt, minimiert ist bzw. nicht mehr auftritt.

Im Rahmen der vorliegenden Erfindung hat sich als sehr günstig erwiesen, wenn die erste Schicht Polyvinylidenfluorid (PVDF) enthält oder daraus besteht und / oder ein Co-Polymer des Polyvinylidenfluorids (PVDF) mit Hexafluorpropylen (HFP) enthält oder daraus besteht und / oder ein Co-Polymer des Polyvinylidenfluorids (PVDF) mit Chlortrifluorethylen (CTFE) enthält oder daraus besteht und die dritte Schicht ein Polymermaterial enthält oder aus einem Polymermaterial besteht, das ausgewählt ist aus einem Polyamid, insbesondere einem Polyamid 6 oder einem Polyamid 6.6 oder einem Polyamid 6.10, oder einem vernetzten Polyethylen, insbesondere einem silanvernetzten Polyethylen (PE-Xb).

In einer anderen sehr günstigen Ausführungsart der Erfindung kann vorgesehen sein, dass die erste Schicht ein Polymermaterial enthält oder aus einem Polymermaterial besteht, das ausgewählt ist aus einem Polyamid, insbesondere einem Polyamid 6 oder einem Polyamid 6.6 oder einem Polyamid 6.10, oder einem vernetzten Polyethylen, insbesondere einem silanvernetzten Polyethylen (PE-Xb) und die dritte Schicht Polyvinylidenfluorid (PVDF) enthält oder daraus besteht und / oder ein Co-Polymer des Polyvinylidenfluorids (PVDF) mit Hexafluorpropylen (HFP) enthält oder daraus besteht und / oder ein Co-Polymer des Polyvinylidenfluorids (PVDF) mit Chlortrifluorethylen (CTFE) enthält oder daraus besteht.

Durch das Vorsehen der oben genannten Polymermaterialien für die erste und dritte bzw. für die dritte und erste Schicht der Wandung des Schlauches wird gewährleistet, dass einerseits die Permeation von Wasser oder Wasserdampf durch die Wandung des Schlauches hindurch begrenzt ist, dass der Schlauch eine hohe Flexibilität aufweist, dass der Schlauch eine hohe chemische Widerstandsfähigkeit besitzt und eine gute mechanische Beständigkeit beispielsweise gegen Belastungen wie Abrieb, Knicken etc. zeigt.

Hierzu zeigt die Tabelle 1 exemplarisch die Wasserdampfdurchlässigkeit (WDD) bzw. die normalisierte Wasserdampfdurchlässigkeit (WDD normalisiert) für verschiedene Polymermaterialien, die anhand von Folien der angegebenen Foliendicke (in µm) bestimmt wurde.

**Tabelle 1**

| Kunststoff | Temperatur [°C] | Foliendicke [µm] | WDD [g / (m² x d)] | WDD normalisiert [(g x µm) / (m² x d)] |
|---|---|---|---|---|
| PVDF | 23 | 90 | 2,4 | 216 |
| PCTFE | 40 | 25 | 0,4 - 0,9 | 10 - 22,5 |
| PA 6 / PA 66 | 23 | 100 | 10 - 20 | 1000 - 2000 |

Im Rahmen der Erfindung hat sich als günstig erwiesen, wenn die zweite Schicht ein Polymermaterial enthält oder aus einem Polymermaterial besteht, das ausgewählt ist aus einem Ethylenvinylacetat, oder einem Ethylen-Glycidylmethacrylat-Co-Polymer (E-GMA) oder einem Ter-Polymer aus Ethylen, Glycidylmethacrylat und Vinylacetat (E-GMA-VA), oder einem Ter-Polymer aus Ethylen, Glycidylmethacrylat und Methylacrylat (E-GMA-MA) oder aus einer Mischung der vorgenannten.

Eine solche zweite Schicht, die ein Polymermaterial enthält oder aus einem Polymermaterial besteht, wie vorstehend beschrieben, ist in ganz besonderem Maße dazu geeignet, die erste und die dritte Schicht der Wandung des flexiblen Schlauches haftend miteinander zu verbinden.

Durch die dadurch erzeugte Haftung der ersten und der dritten Schicht der Wandung des Schlauches ist eine besonders einfache Konnektierung des Schlauches an einem Fitting möglich, da beim Einschieben oder Einschrauben der Schlauchtüllen in das Lumen des Schlauches keine unerwünschte Abschälung oder Delaminierung von Schichten stattfindet.

Der flexible Schlauch der vorliegenden Erfindung kann in einer bevorzugten Ausführungsform so gestaltet sein, dass die erste Schicht eine Dicke von 0,08 mm bis 0,5 mm aufweist.

Es kann im Rahmen der vorliegenden Erfindung vorgesehen sein, dass die zweite Schicht eine Dicke von 0,05 mm bis 0,2 mm aufweist.

Darüber hinaus kann die dritte Schicht mit einer Dicke von 0,3 mm bis 1,5 mm ausgelegt sein.

Durch die Auswahl der genannten Dicken der einzelnen Schichten der Wandung des flexiblen Schlauches resultiert ein äußerst flexibler, sehr knickbeständiger, mechanisch beanspruchbarer und leicht konnektierbarer flexibler Schlauch, der den Zutritt von Wasser zum Lumen des Schlauches außerordentlich begrenzt.

In einer bevorzugten Fortbildung der vorliegenden Erfindung ist bei dem flexiblen Schlauch vorgesehen, dass auf der Außenoberfläche der dritten Schicht ein Verstärkungsmittel angeordnet ist, das vorzugsweise mit der Außenoberfläche chemisch verbunden ist.

Als Verstärkungsmittel ist hierzu beispielsweise eine Umflechtung oder Umwicklung mit einem oder mehreren Fäden, Filamenten, Fadenscharen, Bändern, Folien, textilen Flächengebilden oder Ähnlichem vorgesehen.

In ganz besonders bevorzugter Weise ist das Verstärkungsmittel eine Umflechtung, die auf der Außenoberfläche der dritten Schicht angeordnet ist.

Durch das Vorsehen einer Umflechtung wird eine ganz besonders hohe Druckbeständigkeit des flexiblen Schlauches erreicht.

Hierbei kann vorgesehen sein, dass das Verstärkungsmittel mit der Außenoberfläche chemisch verbunden ist, indem dazu entsprechende Vorkehrungen getroffen sind. Dies kann beispielsweise eine Aktivierung der Außenoberfläche und / oder eine besondere Oberflächenbehandlung des Verstärkungsmittels umfassen.

In einer weiteren bevorzugten Weiterbildung der vorliegenden Erfindung kann vorgesehen sein, dass auf dem Verstärkungsmittel und / oder auf der Außenoberfläche der dritten Schicht eine weitere Schicht angeordnet ist.

Die weitere angeordnete Schicht besteht bevorzugt aus einem Polymermaterial bzw. enthält ein solches.

Damit kann insbesondere das Verstärkungsmittel, welches auf der Außenoberfläche der dritten Schicht angeordnet ist, geschützt werden.

Die weitere Schicht kann auch dazu dienen, den Schlauch vor Beschädigungen und Abrieb zu schützen.

Schließlich kann die weitere Schicht auch dazu dienen, dem flexiblen Schlauch ein optisch ansprechendes Aussehen zu verleihen, indem diese beispielsweise eingefärbt ist.

Als Polymermaterial der weiteren Schicht kann insbesondere ein Polyamid, beispielsweise ein Polyamid 6 oder ein Polyamid 6.6 oder ein Polyamid 6.10 oder ein Polyamid 12 oder ein Polyamid 6.12, oder ein thermoplastisches Polyesterelastomer, oder ein vernetztes Polyethylen, insbesondere ein silanvernetztes Polyethylen (PE-Xb) eingesetzt werden.

Eine weitere Aufgabe der vorliegenden Erfindung, ein Fluidleitsystem anzugeben, erfährt ihre Lösung in Anspruch 10.

Im Rahmen der Erfindung wurde erkannt, dass ein Fluidleitsystem dann besonders vorteilhaft ist, wenn es wenigstens einen flexiblen Schlauch gemäß vorstehend beschriebener Art aufweist.

Anwendung findet der flexible Schlauch der vorliegenden Erfindung insbesondere bei Fluidleitsystemen, die bei Fahrzeugen eingesetzt werden.

Hierbei handelt es sich insbesondere um sog. Hydraulikschläuche, die ein Fluid unter Druck aufnehmen und weiterleiten.

Solche Systeme sind beispielsweise bei Fahrrädern eingebaut, um bei diesen hydraulische Bremsen zu betätigen.
Hierzu wird das in dem flexiblen Schlauch aufgenommene Fluid bei Betätigung eines Kolbens unter Druck gesetzt und vermittelt diesen Druck weiter bis zu einer entsprechenden Mimik, die die Bremse betätigt.
Das im flexiblen Schlauch aufgenommene Fluid ist hygroskopisch und würde Wasser aus der Umgebung aufnehmen. Diese Wasseraufnahme wird durch den flexiblen Schlauch der vorliegenden Erfindung wirksam begrenzt bzw. unterbunden.
Ein Wasseranteil in diesem Hydraulikfluid ist in hohem Maße unerwünscht, da dadurch die Bremswirkung verändert wird, was mit einer erheblichen Gefährdung des Fahrers des Rades einhergeht.

Weitere wichtige Merkmale und Vorteile der Erfindung ergeben sich aus den Unteransprüchen, aus der Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Fig. dargestellt und werden in der nachfolgenden Beschreibung näher erläutert.

Die Erfindung wird anhand der beigefügten Figur näher erläutert.

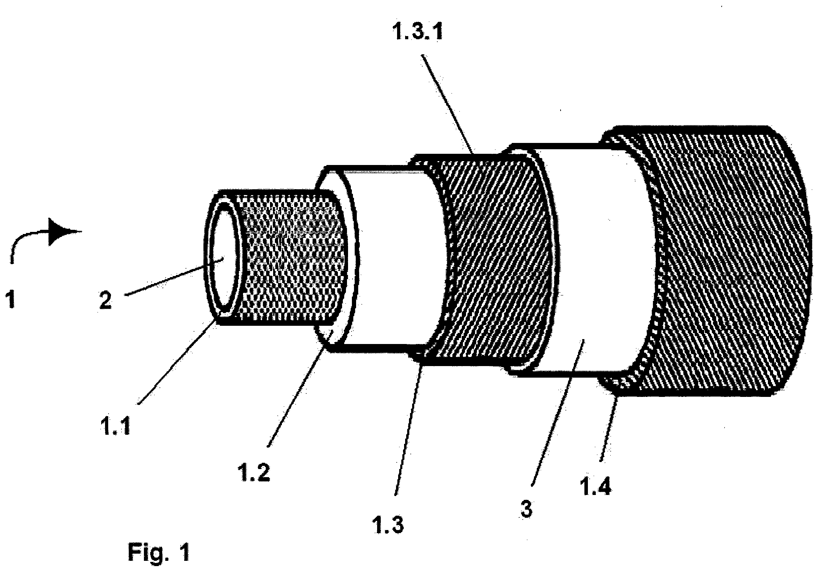

Hierzu zeigt
- Fig. 1: eine perspektivische Ansicht des erfindungsgemäßen flexiblen Schlauches.

Fig. 1 zeigt eine perspektivische Ansicht des erfindungsgemäßen flexiblen Schlauches 1 mit einer mehrschichtigen Wandung, wobei einzelne Schichten der Wandung freigelegt sind.

Die Wandung des flexiblen Schlauches 1 wird dabei von einer ersten Schicht 1.1 gebildet, die das Lumen 2 des flexiblen Schlauches 1 begrenzt.

An der Außenseite der ersten Schicht 1.1 ist eine zweite Schicht 1.2 angeordnet, wobei die erste Schicht 1.1 und die zweite Schicht 1.2 fest miteinander verbunden sind.

An der Außenseite der zweiten Schicht 1.2 ist eine dritte Schicht 1.3 angeordnet, wobei die dritte Schicht 1.3 fest an der zweiten Schicht 1.2 anhaftet.

An der Außenoberfläche 1.3.1 der dritten Schicht 1.3 ist ein Verstärkungsmittel, das beispielsweise in Form einer Umflechtung ausgebildet ist, angeordnet.

Das Verstärkungsmittel 3, das auf der Außenoberfläche 1.3.1 der dritten Schicht 1.3 angeordnet ist, wird von einer Schicht 1.4 bedeckt, die als Schutzschicht fungiert.

Die Darstellung in Fig. 1 ist rein schematisch und insbesondere hinsichtlich der dargestellten Dicken der einzelnen Schichten 1.1, 1.2, 1.3, 1.4 nicht maßstäblich.

In einem ersten bevorzugten Ausführungsbeispiel der Erfindung ist die erste Schicht 1.1 des flexiblen Schlauches 1 aus Polyvinylidenfluorid (PVDF) gebildet.

Die zweite Schicht 1.2 ist aus Ethylenvinylacetat und die dritte Schicht aus Polyamid 6.6 ausgebildet.

Das Verstärkungsmittel 3 ist eine Umflechtung mit einem Polyesterfadengelege und die Schicht 1.4 ist ebenfalls aus Polyamid 6.6 gebildet.

In einer zweiten bevorzugten Ausführungsform der Erfindung ist vorgesehen, dass die erste Schicht 1.1 des flexiblen Schlauches 1 aus Polyamid 6.6 besteht, die zweite Schicht 1.2 aus Ethylenvinylacetat gebildet ist und die dritte Schicht 1.3 aus Polyvinylidenfluorid (PVDF) besteht.

Das Verstärkungsmittel 3 ist ein Polyesterfadengelege, mit dem der flexible Schlauch 1 umflochten ist.

Dieses Verstärkungsmittel 3 ist von einer Schicht 1.4 aus Polyamid 6.6 bedeckt.

### Bezugszeichenliste

- 1: Flexibler Schlauch
- 1.1: erste Schicht
- 1.2: zweite Schicht
- 1.3: dritte Schicht
- 1.3.1: Außenoberfläche
- 1.4: Schicht
- 2: Lumen
- 3: Verstärkungsmittel

## Patentansprüche

1. Flexibler Schlauch (1) mit einer mehrschichtigen Wandung, die ein Lumen (2) umgibt, mit folgender Schichtanordnung:
- eine erste Schicht (1.1), die das Lumen (2) des Schlauches (1) begrenzt,
- eine auf der ersten Schicht (1.1) angeordnete zweite Schicht (1.2),
- eine dritte Schicht (1.3), die auf der zweiten Schicht (1.2) angeordnet ist,
wobei die erste Schicht (1.1) Polyvinylidenfluorid (PVDF) enthält oder daraus besteht und / oder ein Co-Polymer des Polyvinylidenfluorids (PVDF) mit Hexafluorpropylen (HFP) enthält oder daraus besteht und / oder ein Co-Polymer des Polyvinylidenfluorids (PVDF) mit Chlortrifluorethylen (CTFE) enthält oder daraus besteht und die dritte Schicht (1.3) ein Polymermaterial enthält oder aus einem Polymermaterial besteht, das ausgewählt ist aus einem Polyamid, insbesondere einem Polyamid 6 oder einem Polyamid 6.6 oder einem Polyamid 6.10, oder einem vernetzten Polyethylen, insbesondere einem silanvernetzten Polyethylen (PE-Xb),
oder
wobei die erste Schicht (1.1) ein Polymermaterial enthält oder aus einem Polymermaterial besteht, das ausgewählt ist aus einem Polyamid, insbesondere einem Polyamid 6 oder einem Polyamid 6.6 oder einem Polyamid 6.10, oder einem vernetzten Polyethylen, insbesondere einem silanvernetzten Polyethylen (PE-Xb) und die dritte Schicht (1.3) Polyvinylidenfluorid (PVDF) enthält oder daraus besteht und / oder ein Co-Polymer des Polyvinylidenfluorids (PVDF) mit Hexafluorpropylen (HFP) enthält oder daraus besteht und / oder ein Co-Polymer des Polyvinylidenfluorids (PVDF) mit Chlortrifluorethylen (CTFE) enthält oder daraus besteht,
**dadurch gekennzeichnet, dass**
die zweite Schicht (1.2) an der ersten Schicht (1.1) und an der dritten Schicht (1.3) haftet
und
dass die zweite Schicht (1.2) ein Polymermaterial enthält oder aus einem Polymermaterial besteht, das ausgewählt ist aus einem Ethylenvinylacetat oder einem Ethylen-Glycidylmethacrylat-Co-Polymer (E-GMA) oder einem Ter-Polymer aus Ethylen, Glycidylmethacrylat und Vinylacetat (E-GMA-VA), oder einem Ter-Polymer aus Ethylen, Glycidylmethacrylat und Methylacrylat (E-GMA-MA), oder aus einer Mischung der vorgenannten.

2. Flexibler Schlauch (1) nach Anspruch 1, **dadurch gekennzeichnet, dass** die Differenz der materialbezogenen normalisierten Wasserdampfdurchlässigkeit, gemessen nach DIN 53122-1:2001-08, Klima D, zwischen der ersten Schicht (1.1) und der dritten Schicht (1.3) oder der dritten Schicht (1.3) und der ersten Schicht (1.1) mindestens 150 (g x µm) / (m² x d) beträgt, wobei die die normalisierte Wasserdampfdurchlässigkeit das Produkt der Wasserdampfdurchlässigkeit nach DIN 53122-1 mit der bei der Messung verwendeten Foliendicke ist.

3. Flexibler Schlauch (1) nach einem der vorangehenden Ansprüche, **dadurch gekennzeichnet, dass** die erste Schicht (1.1) eine Dicke von 0.08 mm bis 0.5 mm aufweist.

4. Flexibler Schlauch (1) nach einem der vorangehenden Ansprüche, **dadurch gekennzeichnet, dass** die zweite Schicht (1.2) eine Dicke von 0.05 mm bis 0.2 mm aufweist.

5. Flexibler Schlauch (1) nach einem der vorangehenden Ansprüche, **dadurch gekennzeichnet, dass** die dritte Schicht (1.3) eine Dicke von 0.3 mm bis 1.5 mm aufweist.

6. Flexibler Schlauch (1) nach einem der vorangehenden Ansprüche, **dadurch gekennzeichnet, dass** auf der Außenoberfläche (1.3.1) der dritten Schicht (1.3) ein Verstärkungsmittel (3) angeordnet ist, das vorzugsweise mit der Außenoberfläche (1.3.1) chemisch verbunden ist.

7. Flexibler Schlauch (1) nach einem der vorangehenden Ansprüche, **dadurch gekennzeichnet, dass** auf dem Verstärkungsmittel (3) und / oder auf der Außenoberfläche (1.3.1) der dritten Schicht (1.3) eine weitere Schicht (1.4) angeordnet ist.

8. Fluidleitsystem mit wenigstens einem flexiblen Schlauch (1) nach einem der Ansprüche 1 bis 7.

## Claims

1. A flexible hose (1) having a multi-layer wall, which surrounds a lumen (2), having the following layer arrangement:
- a first layer (1.1), which delimits the lumen (2) of the hose (1),
- a second layer (1.2) arranged on the first layer (1.1),
- a third layer (1.3), which is arranged on the second layer (1.2),
wherein the first layer (1.1) comprises or consists of polyvinylidene fluoride (PVDF) and/or comprises or consists of a copolymer of polyvinylidene fluoride (PVDF) with hexafluoropropylene (HFP) and/or comprises or consists of a copolymer of polyvinylidene fluoride (PVDF) with chlorotrifluoroethylene (CTFE) and the third layer (1.3) comprises or consists of a polymer material which is selected from a polyamide, in particular a polyamide 6 or a polyamide 6.6 or a polyamide 6.10, or a crosslinked polyethylene, in particular a silane-crosslinked polyethylene (PE-Xb)
or
wherein the first layer (1.1) comprises or consists of a polymer material which is selected from a polyamide, in particular a polyamide 6 or a polyamide 6.6 or a polyamide 6.10, or a crosslinked polyethylene, in particular a silane-crosslinked polyethylene (PE-Xb), and the third layer (1.3) comprises or consists of polyvinylidene fluoride (PVDF) and/or comprises or consists of a copolymer of polyvinylidene fluoride (PVDF) with hexafluoropropylene (HFP) and/or comprises or consists of a copolymer of polyvinylidene fluoride (PVDF) with chlorotrifluoroethylene (CTFE),
**characterised in that**
the second layer (1.2) adheres to the first layer (1.1) and to the third layer (1.3)
and
**in that** the second layer (1.2) comprises or consists of a polymer material which is selected from an ethylene-vinyl acetate or an ethylene-glycidyl methacrylate copolymer (E-GMA) or a terpolymer of ethylene, glycidyl methacrylate and vinyl acetate (E-GMA-VA) or a terpolymer of ethylene, glycidyl methacrylate and methyl acrylate (E-GMA-MA) or from a mixture of the above.

2. The flexible hose (1) according to claim 1, **characterised in that** the difference in the material-based normalised water vapour transmission, measured in accordance with DIN 53122-1:2001-08, climate D, between the first layer (1.1) and the third layer (1.3) or the third layer (1.3) and the first layer (1.1) is at least 150 (g x µm)/(m² x d), wherein the normalised water vapour transmission is the product of the water vapour transmission according to DIN 53122-1 with the film thickness used in the measurement.

3. The flexible hose (1) according to one of the preceding claims, **characterised in that** the first layer (1.1) has a thickness of 0.08 mm to 0.5 mm.

4. The flexible hose (1) according to one of the preceding claims, **characterised in that** the second layer (1.2) has a thickness of 0.05 mm to 0.2 mm.

5. The flexible hose (1) according to one of the preceding claims, **characterised in that** the third layer (1.3) has a thickness of 0.3 mm to 1.5 mm.

6. The flexible hose (1) according to one of the preceding claims, **characterised in that** on the external surface (1.3.1) of the third layer (1.3) a reinforcing means (3) is arranged, which is preferably chemically bonded to the external surface (1.3.1).

7. The flexible hose (1) according to one of the preceding claims, **characterised in that** on the reinforcing means (3) and/or on the external surface (1.3.1) of the third layer (1.3) a further layer (1.4) is arranged.

8. A fluid conveying system having at least one flexible hose (1) according to one of claims 1 to 7.

## Revendications

1. Tuyau flexible (1) doté d'une paroi multicouche entourant une lumière (2), avec la disposition en couches suivante :
- une première couche (1.1) qui délimite la lumière (2) du tuyau (1),
- une deuxième couche (1.2) qui est disposée sur la première couche (1.1),
- une troisième couche (1.3) qui est disposée sur la deuxième couche (1.2),
la première couche (1.1) contenant du fluoride de polyvinylidène (PVDF) ou consiste en celui-ci et/ou contenant un copolymère du fluoride de polyvinylidène (PVDF) avec de l'hexafluorpropylène (HFP) ou consiste en celui-ci et/ou contenant un copolymère du fluoride de polyvinylidène (PVDF) avec du chlorotrifluoréthylène (CTFE) ou consiste en celui-ci, et la troisième couche (1.3) contient un matériau polymère ou consiste en un matériau polymère qui est sélectionné parmi un polyamide, en particulier un polyamide 6 ou un polyamide 6.6 ou un polyamide 6.10, ou un polyéthylène réticulé, en particulier un polyéthylène réticulé au silane (PEX-b),
ou
la première couche (1.1) contenant un matériau polymère ou consiste en un matériau polymère qui est sélectionné parmi un polyamide, en particulier un polyamide 6 ou un polyamide 6.6 ou un polyamide 6.10, ou un polyéthylène réticulé, en particulier un polyéthylène réticulé au silane (PE-Xb), et la troisième couche (1.3) contenant du fluoride de polyvinylidène (PVDF) ou consiste en celui-ci, et/ou contenant un copolymère du fluoride de polyvinylidène (PVDF) avec de l'hexafluorpropylène (HFP) ou consiste en celui-ci, et/ou contenant un copolymère du fluoride de polyvinylidène (PVDF) avec du chlorotrifluoréthylène (CTFE) ou consiste en celui-ci,
**caractérisé en ce que**
la deuxième couche (1.2) adhère à la première couche (1.1) et à la troisième couche (1.3)
et
**en ce que** la deuxième couche (1.2) contient un matériau polymère ou consiste en un matériau polymère qui est sélectionné parmi un éthylène-acétate de vinyle ou un copolymère de méthacrylate de glycidyle éthylénique (E-GMA) ou un terpolymère d'éthylène, de méthacrylate de glycidyle et d'acétate de vinyle (E-GMA-VA), ou un terpolymère d'éthylène, de méthacrylate de glycidyle et de méthacrylate (E-GMA-MA), ou un mélange des précédents.

2. Tuyau flexible (1) selon la revendication 1, **caractérisé en ce que** la différence de la perméabilité à la vapeur d'eau normalisée spécifiée par rapport au matériel, mesurée selon la norme DIN 53122-1:2001-08, climatisation D, entre la première couche (1.1) et la troisième couche (1.3) ou entre la troisième couche (1.3) et la première couche (1.1) atteint au moins 150 (g x µm) / (m² x d), la perméabilité à la vapeur d'eau normalisée étant le produit de la perméabilité à la vapeur d'eau selon la norme DIN 53122-1 et de l'épaisseur du film utilisé lors de la mesure.

3. Tuyau flexible (1) selon l'une quelconque des revendications précédentes, **caractérisé en ce que** la première couche (1.1) présente une épaisseur comprise entre 0,08 mm et 0,5 mm.

4. Tuyau flexible (1) selon l'une quelconque des revendications précédentes, **caractérisé en ce que** la deuxième couche (1.2) présente une épaisseur comprise entre 0,05 et 0,2 mm.

5. Tuyau flexible (1) selon l'une quelconque des revendications précédentes, **caractérisé en ce que** la troisième couche (1.3) présente une épaisseur comprise entre 0,3 et 1,5 mm.

6. Tuyau flexible (1) selon l'une quelconque des revendications précédentes, **caractérisé en ce que** un agent renforçateur (3) est disposé sur la surface extérieure (1.3.1) de la troisième couche (1.3) qui est de préférence lié chimiquement à la surface extérieure (1.3.1).

7. Tuyau flexible (1) selon l'une quelconque des revendications précédentes, **caractérisé en ce qu'**une couche supplémentaire (1.4) est appliquée sur l'agent renforçateur (3) et/ou sur la surface extérieure (1.3.1) de la troisième couche (1.3).

8. Système de guidage de fluide doté d'au moins un tuyau flexible (1) selon l'une quelconque des revendications 1 à 7.
